# EUROPEAN PATENT APPLICATION

(11) **EP 1 806 698 A1**
(43) Date of publication of application: **11.07.2007**
(21) Application number: 05795526.2
(22) Date of filing: 21.10.2005
(51) Int. Cl.: G06T 7/00, A61B 5/117

(54) **BIOMETRIC IDENTIFICATION SYSTEM AND BIOMETRIC IDENTIFICATION METHOD**

(30) Priority: 29.10.2004 JP 2004316111
(71) Applicant: MATSUSHITA ELECTRIC INDUSTRIAL CO., LTD., Osaka 571-8501 (JP)
(72) Inventor: IMAI, Koji, c/o Matsushita El. Ind. Co., IPROC, 1-chome, Chuo-ku, Osaka-shi, Osaka 540-6319 (JP); TASHIRO, Takayuki, c/o Mats. El. Ind. Co., IPROC, IP, Chuo-ku, Osaka-shi, Osaka 540-6319 (JP); SUO, Toshinari, Mats. El. Ind. Co., IPROC, IP Dev., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/019380
(87) International publication number: WO 2006/046479

(57) **Abstract**

The present invention aims at providing a biometric identification system and a biometric identification method capable of improving accuracy of verification in a biometric identification by registering plural pieces of bioinformation suitable for the verification. A biometric identification system of the present invention includes a bioinformation inputting portion 11 for inputting first bioinformation to be registered previously to execute a biometric identification, a registered bioinformation database 12 for storing second bioinformation to verify the first bioinformation, and a bioinformation identifying portion 13 for computing a similarity between the first bioinformation and the second bioinformation, and also includes a bioinformation identifying portion 13 for storing the first bioinformation into the registered bioinformation database 12 as bioinformation of the same subject as the second bioinformation when the similarity between the first bioinformation and the second bioinformation is within a predetermined numerical range.

## Description

### Technical Field

The present invention relates to a biometric identification system and a biometric identification method for verifying the biometric identification subject by using bioinformation about the previously registered subject of the biometric identification.

### Background Art

The biometric identification system is used to identify the person himself or herself by utilizing bioinformation of a human being such as a fingerprint, a voiceprint, a face, an iris, or the like. This biometric identification system is provided to a wide variety of products and is now utilized in various environments and circumstances.

In case the biometric identification system is utilized in various environments and circumstances, it is difficult more and more for the user of the biometric identification system to input the bioinformation that is always kept in the same condition into the biometric identification system every time when the identification is needed. For example, in the case of the fingerprint identification, fingerprint information whose condition is different depending upon an amount of moisture adhered onto the finger is input into the biometric identification system. Also, in the case of the voiceprint identification, voiceprint information whose condition is different depending upon physical conditions, especially a throat condition, is input into the biometric identification system. Also, in the case of the face identification, face information whose condition is different depending upon an irradiated condition of a light onto a face is input into the biometric identification system.

In this manner, in the case where only one bioinformation of the identification subject is registered previously in the biometric identification system, such a situation is increased that, even when the verification is applied to the same identification subject, the bioinformation being input in starting the identification is not decided as the identical bioinformation to the previously registered bioinformation. Therefore, when the bioinformation whose condition is different every time when the identification is conducted is input into the biometric identification system, a reduction in verification accuracy of the biometric identification system is caused. As a result, it is appreciated that, in order to improve the verification accuracy of the biometric identification system, variations of the bioinformation should be registered with respect to each identification subject in the biometric identification system as many as possible.

As the bioinformation verifying system in the prior art, there is the bioinformation verifying system in which the face image having various expressions and a plurality of face images in which the direction of the face is set at any different angle such as upward-turned face, downward-turned face, a face in profile, and the like are registered with respect to each identification subject (see Patent Literature 1). According to this bioinformation verifying system, the verification accuracy can be enhanced by using a plurality of face images of the same identification subject in a decision of verification.
Patent Literature 1: JP-A-2003-346149

### Disclosure of the Invention

### Problems that the Invention is to Solve

However, in the bioinformation verifying system in the prior art registered, plural pieces of bioinformation that the identification subject himself or herself evaluates subjectively such that their situations are different are registered. Therefore, it is possible that either plural pieces of analogous bioinformation are registered or conversely plural pieces of bioinformation that are very different from the bioinformation usable in the identification are registered. Even though many pieces of analogous bioinformation are registered in the bioinformation verifying system, a variation of the bioinformation is substantially narrow. Also, even though many pieces of bioinformation that are very different from the bioinformation usable in the identification are registered in the bioinformation verifying system, such bioinformation is slightly related to the bioinformation being input in starting the identification. As a result, the above approaches do not lead to an improvement of the verification accuracy.
The present invention has been in light of the above circumstances, and it is an object of the present invention to provide a biometric identification system and a biometric identification method capable of improving accuracy of verification in a biometric identification by registering plural pieces of bioinformation suitable for the verification.

### Means for Solving the Problems

A biometric identification system of the present invention, includes an inputting unit for inputting first bioinformation to be registered previously to execute a biometric identification; a storing unit for storing second bioinformation to verify the first bioinformation; and a computing unit for computing a similarity between the first bioinformation and the second bioinformation; and also includes a registering unit for storing the first bioinformation into the storing unit as bioinformation of a same subject as the second bioinformation when the similarity between the first bioinformation and the second bioinformation is within a predetermined numerical range.

A biometric identification method of the present invention of executing a biometric identification by using previously registered bioinformation, includes a first inputting step of inputting first bioinformation to be registered previously to execute a biometric identification; a first computing step of computing a similarity between the first bioinformation and second bioinformation registered previously to verify the first bioinformation; and a first registering step of registering the first bioinformation as bioinformation of a same subject as the second bioinformation when the similarity between the first bioinformation and the second bioinformation is within a predetermined numerical range.

According to this configuration, the bioinformation that are decides by the similarlity and are suitable for the verification are registered. Therefore, the verification accuracy in identifying the bioinformation can be improved.

Also, in the biometric identification system of the present invention, the storing unit stores plural pieces of bioinformation of the same subject containing the first bioinformation and the second bioinformation, the inputting unit inputs third bioinformation to be registered previously to execute the biometric identification, the computing unit computes similarities between the third bioinformation and the plural pieces of bioinformation, and the registering unit causes the storing unit to record the third bioinformation as the bioinformation of the same subject as the plural pieces of bioinformation when at least one of similarities between the third bioinformation and the plural pieces of bioinformation is within a predetermined numerical range.

Also, the biometric identification method of the present invention further includes a second inputting step of inputting third bioinformation to be registered previously to execute the biometric identification; a second computing step of computing similarities between the third bioinformation and the plural pieces of bioinformation of the same subject containing the first bioinformation and the second bioinformation registered in the first registering step; and a second registering step of registering the third bioinformation as the bioinformation of the same subject as the plural pieces of bioinformation when at least one of similarities between the third bioinformation and the plural pieces of bioinformation is within a predetermined numerical range.

According to this configuration, plural pieces of bioinformation that is decides by the similarlity and is suitable for the verification are registered.

Therefore, the verification accuracy in identifying the bioinformation can be improved.

Also, in the biometric identification system of the present invention, the registering unit causes the storing unit to record the third bioinformation as the bioinformation of the same subject as the plural pieces of bioinformation when at least one of similarities between the third bioinformation and the plural pieces of bioinformation is within a predetermined numerical range that is adjusted in response to a number of the plural pieces of bioinformation.

Also, the biometric identification method of the present invention further includes an adjusting step of adjusting the predetermined numerical value range in response to a number of the plural pieces of bioinformation; wherein the second registering step registers the third bioinformation as the bioinformation of the same subject as the plural pieces of bioinformation when at least one of similarities between the third bioinformation and the plural pieces of bioinformation is within a predetermined numerical range that is adjusted in the adjusting step.

According to this configuration, a predetermined numerical range is adjusted in response to the number of plural pieces of bioinformation that have already been registered. Therefore, the input bioinformation can be registered effectively.

Also the biometric identification system of the present invention further includes a deciding unit for deciding whether or not the bioinformation input by the inputting unit and the plural pieces of bioinformation stored in the storing unit belong to the bioinformation of the same subject; wherein the inputting unit inputs fourth bioinformation to execute the biometric identification, the computing unit computes similarities between the fourth bioinformation and the plural pieces of bioinformation, and the deciding unit decides whether or not the fourth bioinformation and the plural pieces of bioinformation belong to the bioinformation of the same subject, based on the similarities between the fourth bioinformation and the plural pieces of bioinformation.

Also, the biometric identification method of the present invention further includes a third inputting step of inputting fourth bioinformation to execute the biometric identification; a third computing step of computing similarities between the fourth bioinformation and the plural pieces of bioinformation; and a deciding step of deciding whether or not the fourth bioinformation and the plural pieces of bioinformation belong to the bioinformation of the same subject, based on the similarities between the fourth bioinformation and the plural pieces of bioinformation.

According to this configuration, the biometric identification is executed by using the bioinformation that is suitable for the verification. Therefore, the verification accuracy can be improved.

Also, in the biometric identification system of the present invention, the registering unit causes the storing unit to record the fourth bioinformation as the bioinformation of the same subject as the plural pieces of bioinformation when at least one of similarities between the fourth bioinformation and the plural pieces of bioinformation is within a predetermined numerical range after a decision is made by the deciding unit.

Also, the biometric identification method of the present invention further includes a third registering step of registering the fourth bioinformation as the bioinformation of the same subject as the plural pieces of bioinformation when at least one of similarities between the fourth bioinformation and the plural pieces of bioinformation is within a predetermined numerical range after a decision is made in the deciding step.

According to this configuration, the bioinformation, at least one of the similarities between which and the bioinformation that have already been registred is within a predetermined numerical range, out of the bioinformation that are decided not to correspond to the bioinformation of the same subject are registered. Therefore, the input bioinformation can be registered effectively.

### Advantage of the Invention

According to the biometric identification system and the biometric identification method of the present invention, the accuracy of verification in the biometric identification can be improved by registering plural pieces of bioinformation suitable for the verification.

### Brief Description of the Drawings

[FIG.1] A configurative view of a biometric identification system according to an embodiment of the present invention.
[FIG.2] An example of a numerical range of a similarity within which bioinformation can be registered in the biometric identification system according to the embodiment of the present invention.
[FIG.3] A process flow in registering the bioinformation in the biometric identification system according to the embodiment of the present invention.
[FIG.4] An example of an image display in registering the bioinformation in a displaying portion provided to the biometric identification system according to the embodiment of the present invention.
[FIG.5] A process flow in deciding whether or not the bioinformation can be registered in the biometric identification system according to the embodiment of the present invention.
[FIG.6] A process flow in verifying the bioinformation in the biometric identification system according to the embodiment of the present invention.
[FIG.7] An example of an image display in verifying the bioinformation in the displaying portion provided to the biometric identification system according to the embodiment of the present invention.

### Description of Reference Numerals

- 11: bioinformation inputting portion
- 12: registered bioinformation database
- 13: bioinformation identifying portion
- 14: bioinformation verifying portion
- 41, 71: target of face position
- 42: target surrounding a face

### Best Mode for Carrying Out the Invention

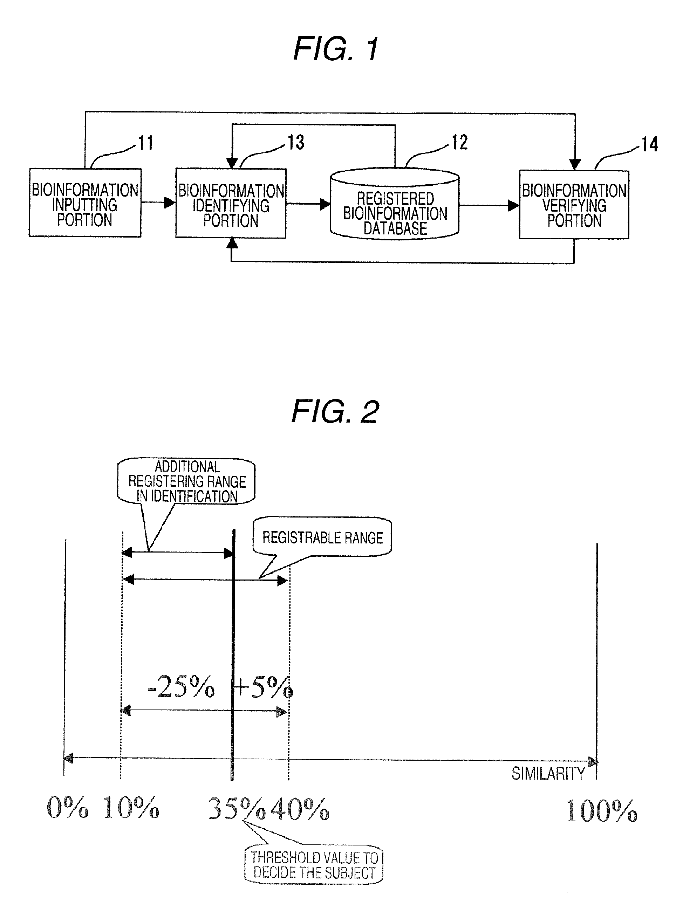

A biometric identification system according to an embodiment of the present invention will be explained in detail with reference to the drawings hereinafter. A configurative view of a biometric identification system according to an embodiment of the present invention is shown in FIG.1.

The biometric identification system according to an embodiment of the present invention includes a bioinformation inputting portion 11 for inputting the bioinformation of the identification subject, a registered bioinformation database 12 for storing the bioinformation of the identification subject, a bioinformation identifying portion 13 for registering the bioinformation, which are decided as registrable one, out of the bioinformation being input into the bioinformation inputting portion 11 in the registered bioinformation database 12, and a bioinformation verifying portion 14 for verifying the bioinformation being input into the bioinformation inputting portion 11 with the bioinformation registered in the registered bioinformation database. Here, the bioinformation inputting portion 11 has a function of an inputting unit set forth in Claims. Also, the registered bioinformation database 12 has a function of a storing unit set forth in Claims. Also, the bioinformation identifying portion 13 has functions of a computing unit and a registering unit set forth in Claims. Also, the bioinformation verifying portion 14 has functions of a computing unit and a deciding unit set forth in Claims.

Next, processes in respective portions executed in registering the bioinformation of the identification subject in the biometric identification system according to the embodiment of the present invention will be explained hereunder. First, when no bioinformation of the identification subject is stored in the registered bioinformation database 12, the bioinformation inputting portion 11 accepts an input of bioinformation (A) of the identification subject, and then the bioinformation identifying portion 13 registers the bioinformation (A) being input into the bioinformation inputting portion 11 in the registered bioinformation database 12 to correlate with the identification subject.

Then, when the bioinformation inputting portion 11 accepts an input of another bioinformation (B) of the same identification subject, the bioinformation identifying portion 13 computes a similarity between the bioinformation (A) registered previously in the registered bioinformation database 12 and another bioinformation (B), which is input into the bioinformation inputting portion 11, of the same identification subject. Then, if a similarity between the bioinformation (A) and another bioinformation (B) is within a predetermined numerical range, the bioinformation identifying portion 13 decides another bioinformation (B) input into the bioinformation inputting portion 11 as the bioinformation of the same identification subject, and then registers additionally such bioinformation in the registered bioinformation database 12 as the bioinformation of the same identification subject.

An example of a numerical range of a similarity within which bioinformation can be registered in the biometric identification system according to the embodiment of the present invention is shown in FIG.2. In the bioinformation identifying portion 13, a predetermined numerical range acting as a reference used to decide whether or not the bioinformation for the identification can be registered in the registered bioinformation database 12 is set from 10 % to 40 %. When the predetermined numerical range is set from 10 % to 40 %, the bioinformation identifying portion 13 can reject the registration of the bioinformation, a similarity of which is from 0 % to 10 % out of the bioinformation being input into the bioinformation inputting portion 11, i.e., which is slightly related to the bioinformation being input into the bioinformation inputting portion 11 in the identification. Also, the bioinformation identifying portion 13 can reject the registration of the bioinformation, a similarity of which is from 40 % to 100 % out of the bioinformation being input into the bioinformation inputting portion 11, i.e., which is analogous to the bioinformation that have already been registered in the registered bioinformation database 12 but whose variation is not changed from the bioinformation of the identification subject.

Since the bioinformation having a similarity contained in the above predetermined numerical range are registered upon registering the bioinformation for the identification, the biometric identification system according to the embodiment of the present invention can register the bioinformation suitable for the biometric identification in the registered bioinformation database 12. In this case, the bioinformation more suitable for the biometric identification may be registered in the registered bioinformation database 12 by adjusting a start point of the numerical value or an end point of the numerical value in the predetermined numerical range.

In order to register additionally the bioinformation of the identification subject in the biometric identification system according to the embodiment of the present invention, when the bioinformation inputting portion 11 accepts an input of still another bioinformation (C) of the same identification subject after the registered bioinformation database 12 stored the bioinformation (B), the bioinformation identifying portion 13 computes similarities between still another bioinformation (C), which is input into the bioinformation inputting portion 11, of the same identification subject and the bioinformation (A) and the bioinformation (B) that have already been registered in the registered bioinformation database 12. When at least one of similarities between the bioinformation (A) and the bioinformation (B) and still another bioinformation (C) is within the predetermined numerical range, the bioinformation identifying portion 13 decides still another bioinformation (C) being input into the bioinformation inputting portion 11 as the bioinformation of the same identification subject, and then registers additionally such bioinformation (C) in the registered bioinformation database 12 as the bioinformation of the same identification subject.

Also, in order to register additionally the bioinformation of the identification subject in the biometric identification system according to the embodiment of the present invention, when the bioinformation inputting portion 11 accepts an input of yet still another bioinformation (D) of the same identification subject after the registered bioinformation database 12 stored the bioinformation (C), the bioinformation identifying portion 13 similarly computes similarities between yet still another bioinformation (D) and the bioinformation (A), the bioinformation (B), and the bioinformation (C). When at least one of similarities between the bioinformation (A), the bioinformation (B), and the bioinformation (C) and yet still another bioinformation (D) is within the predetermined numerical range, the bioinformation identifying portion 13 decides yet still another bioinformation (D) being input into the bioinformation inputting portion 11 as the bioinformation of the same identification subject, and then registers additionally such bioinformation (D) in the registered bioinformation database 12 as the bioinformation of the same identification subject.

Here, it is mentioned as above that, when at least one of similarities between plural pieces of bioinformation stored in the registered bioinformation database 12 and the bioinformation being input into the bioinformation inputting portion 11 is within the predetermined numerical range, the bioinformation being input into the bioinformation inputting portion 11 is registered additionally in the registered bioinformation database 12. But the predetermined numerical range may be adjusted in response to the number of pieces of the bioinformation stored in the registered bioinformation database 12. Concretely, a reference value by which the bioinformation identifying portion 13 decides whether or not the bioinformation is registrable may be set strictly in such a manner that, as the number of pieces of bioinformation stored in the registered bioinformation database 12 is increased, the numerical value of a start point and the numerical value of an end point of the predetermined numerical range are increased.

Also, an approach of deciding whether or not bioinformation (E) is registrable as the bioinformation of the same identification subject, based on the similarities between the bioinformation (A) to (D) stored in the registered bioinformation database 12 and the bioinformation (E) input into the bioinformation inputting portion 11 is not limited to the above approach of making a decision based on at least one similarity. Various approaches such as an approach of making a decision based on an average value of all similarities, an approach of making a decision based on a similarity having the largest (or smallest) numerical value, an approach of making a decision based on several upper similarities having the larger numerical value, and the like can be applied.

Next, processes in respective portions executed in identifying the bioinformation of the identification subject by the biometric identification system according to the embodiment of the present invention after the bioinformation of the identification subject is registered will be explained hereunder. First, when the bioinformation inputting portion 11 accepts an input of the bioinformation (E) of the identification subject, the bioinformation verifying portion 14 computes the similarities between the bioinformation (A) to (D) stored in the registered bioinformation database 12 and the bioinformation (E) input into the bioinformation inputting portion 11 respectively. The bioinformation verifying portion 14 decides that the bioinformation (E) input into the bioinformation inputting portion 11 and the bioinformation (A) to (D) stored in the registered bioinformation database 12 belong to the bioinformation of the same identification subject, based on the similarities between the bioinformation (A) to (D) and the bioinformation (E), for example, when an average value of all similarities exceeds a predetermined threshold value (in FIG.2, a similarity 35 % or more).

Here, an approach of deciding whether or not the person who inputs the bioinformation (E) is the same identification subject, based on the similarities between the bioinformation (A) to (D) stored in the registered bioinformation database 12 and the bioinformation (E) input into the bioinformation inputting portion 11 is not limited to the approach of making a decision based on an average value of all similarities. Various approaches such as an approach of making a decision based on a similarity having the largest (or smallest) numerical value, an approach of making a decision based on several upper similarities having the larger numerical value, and the like can be applied.

Also, the bioinformation verifying portion 14 may operate as follows after it finished the verification of the bioinformation of the identification subject. When the bioinformation verifying portion 14 decides that the bioinformation (E) input into the bioinformation inputting portion 11 and the bioinformation (A) to (D) stored in the registered bioinformation database 12 do not belong to the bioinformation of the same identification subject, based on the similarities between the bioinformation (A) to (D) and the bioinformation (E), it outputs the bioinformation (E) to the bioinformation identifying portion 13. When the bioinformation identifying portion 13 receives the bioinformation (E) from the bioinformation verifying portion 14, it registers additionally the bioinformation (E) input from the bioinformation verifying portion 14 in the registered bioinformation database 12 as the bioinformation of the same identification subject if at least one of the similarities between the bioinformation (A) to (D) stored in the registered bioinformation database 12 and the bioinformation (E) input from the bioinformation verifying portion 14 is within a predetermined numerical range.

In this manner, the bioinformation that the bioinformation verifying portion 14 decided not to belong to the bioinformation of the same identification subject, out of the bioinformation being input into the bioinformation inputting portion 11 to identify the bioinformation of the identification subject are input into the bioinformation identifying portion 13, and then the bioinformation identifying portion 13 decides whether or not such bioinformation is registrable in the registered bioinformation database 12. Therefore, the bioinformation being input into the bioinformation inputting portion 11 can be utilized effectively and can be registered in the registered bioinformation database 12.

In this case, it is preferable that plural pieces of bioinformation of the identification subject should be registered in advance in the registered bioinformation database. Therefore, the identification subject may be prohibited from starting the identification until predetermined pieces of bioinformation are stored.

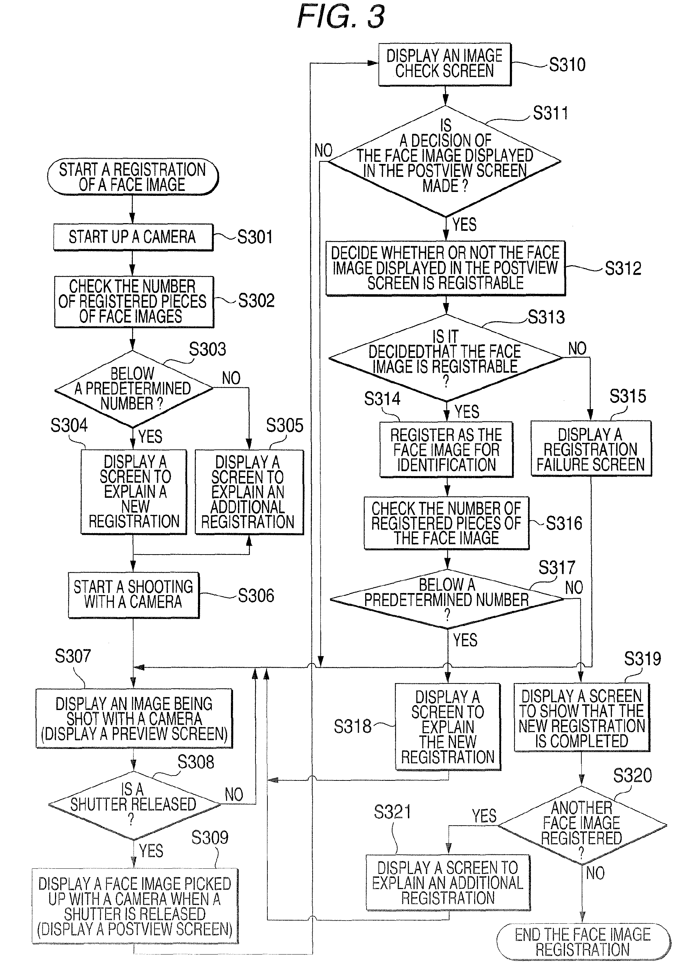

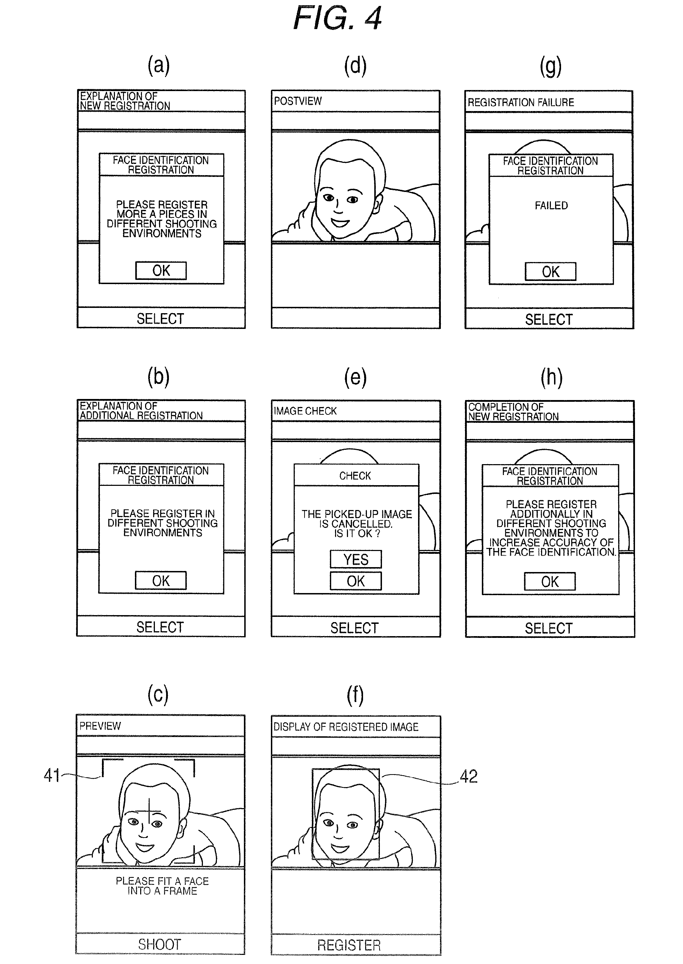

Next, a flow of a bioinformation registering process in the biometric identification system according to the embodiment of the present invention will be explained by taking as an example the case where a face identification is carried out by using a face image picked up with a camera, while referring to a display example of the face image displayed on a display portion provided to the biometric identification system. A process flow in registering the bioinformation in the biometric identification system according to the embodiment of the present invention is shown in FIG.3. An example of an image display in registering the bioinformation in the displaying portion provided to the biometric identification system according to the embodiment of the present invention is shown in FIG.4. Here, the camera corresponds to the bioinformation inputting portion 11 in FIG.1 and inputs the picked-up face image of the identification subject. Also, the displaying portion outputs various information that the identification subject uses to execute comfortably the face identification (for example, a screen for urging the user to check, select, or decide, the identified result of the bioinformation identifying portion 13, or the verified result of the bioinformation verifying portion 14).

When the identification subject starts the registration of the face image, the biometric identification system starts up a camera (S301). The bioinformation identifying portion 13 checks the number of registered pieces of face images of the identification subject registered in the registered bioinformation database 12 (S302). If the registered pieces of the face images of the identification subject are below a predetermined number (S303, YES), the displaying portion displays a screen shown in FIG.4(a) to explain a new registration, and informs the user how many pieces of face images for identification are needed in different shooting environments up to the predetermined number of pieces to attain a high verification accuracy in identifying the bioinformation (S304). If the registered pieces of face images of the identification subject are in excess of the predetermined number (S303, NO), the displaying portion displays a screen shown in FIG.4(b) to explain an additional registration, and does not inform the number of registered pieces of face images but informs the user that the face image for identification should be picked up in different shooting environments to attain a higher verification accuracy in identifying the bioinformation (S305).

The biometric identification system causes the camera to start a shooting after the process in step 304 or step 305 (S306). Then, the displaying portion displays the image being picked up with the camera (display a preview screen shown in FIG.4(c))(S307). In this case, in order to improve the verification accuracy of the face identification of the identification subject, the displaying portion may urge the user to shoot the face such that the face image is fitted into a target 41 of a face position arranged at the center of a preview screen. Thus, the face of the identification subject can always be positioned at the center of the image. If the camera recognizes that the shutter is released by the identification subject (S308, YES), the displaying portion displays the face image that the camera picked up when the shutter is released (a postview screen shown in FIG.4(d))(S309).

After the postview screen is displayed, the displaying portion displays an image check screen shown in FIG.4(e) and urges the user to decide whether or not the image displayed on the postview screen should be registered as the face image for identification (S310). If the identification subject selects that the face image displayed in the postview screen should be registered as the face image for identification (S311, YES), the bioinformation identifying portion 13 starts the verification between the face image displayed in the postview screen and the face image stored in the registered bioinformation database 12 (S312). In contrast, the identification subject selects that the face image displayed in the postview screen should not be registered as the face image for identification (S311, NO), the process goes back to step S307. Then, the displaying portion displays the preview screen.

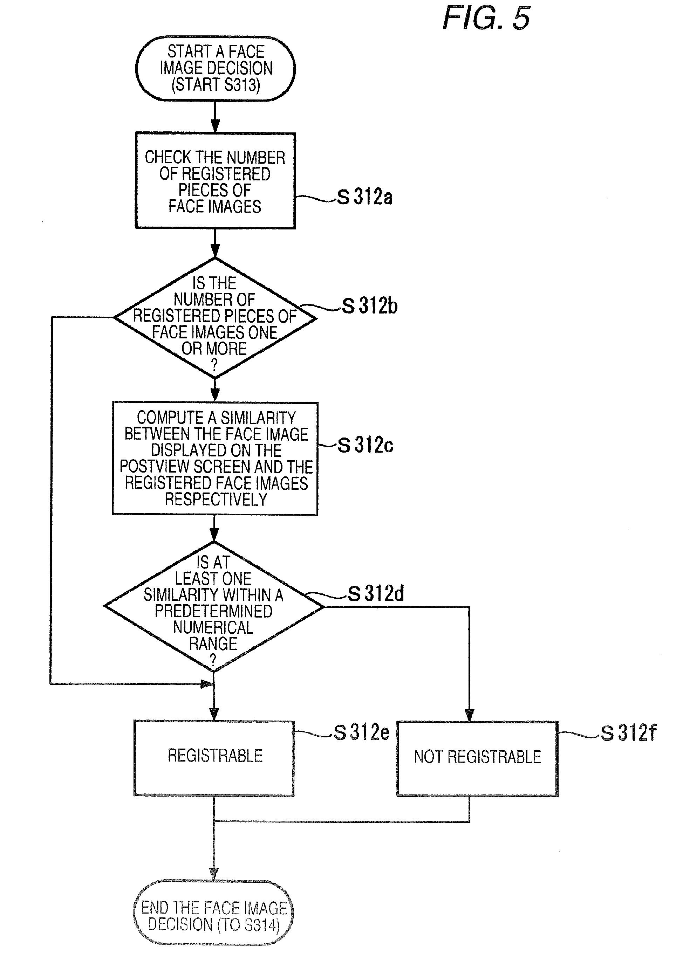

A process flow in deciding whether or not the bioinformation can be registered in the biometric identification system according to the embodiment of the present invention is shown in FIG.5. The bioinformation identifying portion 13 checks the number of registered pieces of face images of the identification subject registered in the registered bioinformation database 12 (S312a). Then, if none of the face images of the identification subject is registered (S312b, NO), the bioinformation identifying portion 13 decides that the face image displayed on the postview screen is registrable as the face image for identification (S312e). In contrast, if one piece or more of face images of the identification subject is found in the process in step S312a (S312b, YES), the bioinformation identifying portion 13 computes the similarities between the face image displayed on the postview screen and the face images registered in the registered bioinformation database 12 respectively (S312c). If at least one of the similarities between the face image for identification displayed on the postview screen and the face images registered in the registered bioinformation database 12 is within a predetermined numerical range (S312d, YES), the bioinformation identifying portion 13 decides that the face image displayed on the postview screen is registrable as the face image for identification (S312e). In contrast, if none of the similarities is within a predetermined numerical range (S312d, NO), the bioinformation identifying portion 13 decides that the face image displayed on the postview screen is not registrable as the face image for identification (S312f).

Returning to FIG.3, if it is decided via the process in step 312 that the face image displayed in the postview screen is registrable as the face image for identification (S313, YES), the bioinformation identifying portion 13 registers the face image displayed in the postview screen in the registered bioinformation database 12 (S314). In contrast, if it is decided that the face image displayed in the postview screen is not registrable as the face image for identification (S313, NO), the displaying portions displays a registration failure screen shown in FIG.4(g) and informs the user that the face image displayed in the postview screen could not be registered as the face image for identification (S315). In this case, in the process in step S314, as shown in FIG.4(f), a target 42 may be displayed in the face image, which is decided as the registrable one, to surround a face portion and to display which part of the face image has been registered.

After the process in step S314, the bioinformation identifying portion 13 checks the number of registered pieces of the face images of the identification subject registered in the registered bioinformation database 12 (S316). If the number of pieces of the face images of the identification subject is below a predetermined number of pieces (S317, YES), the displaying portion displays a screen shown in FIG.4(a) to explain the new registration and informs the user how many pieces of face images for identification are needed in different shooting environments up to the predetermined number of pieces (S318). Then, the process goes back to step S307. In contrast, if the number of pieces of the face images of the identification subject exceeds a predetermined number of pieces (S317, NO), the bioinformation identifying portion 13 causes the displaying portion to display a screen shown in FIG.4(h) to display that the new registration is completed and informs the user that the number or more of pieces of the face images of the identification subject have been registered (S319). After the process in step S320, in order to urge the identification subject to shoot the face images for identification in different shooting environments, the displaying portion displays a screen shown in FIG.4(b) to explain an additional registration (S321). Then, the process goes back to step 307.

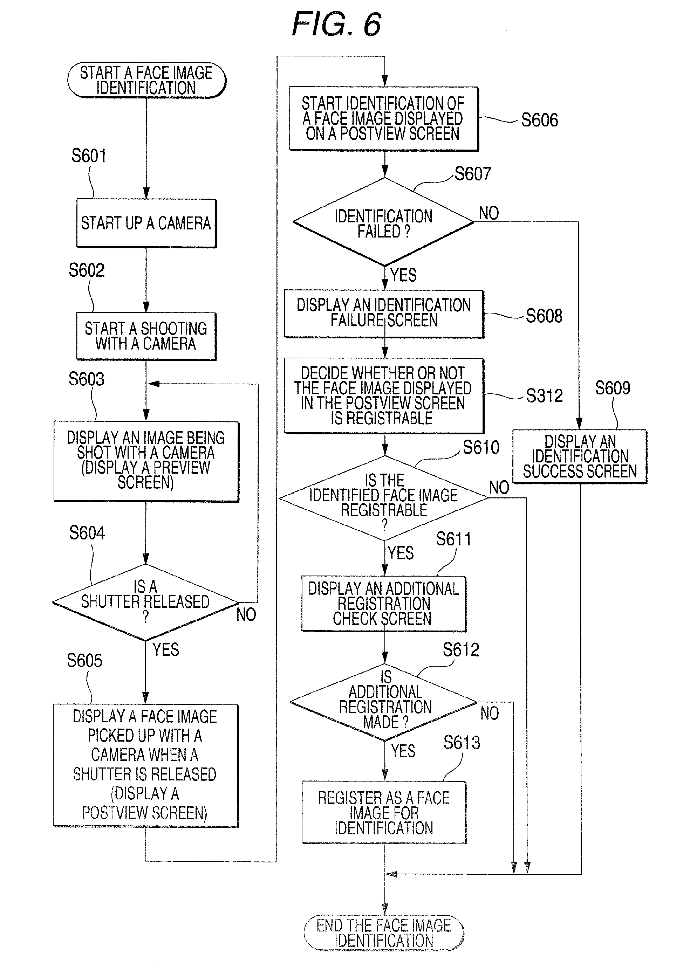

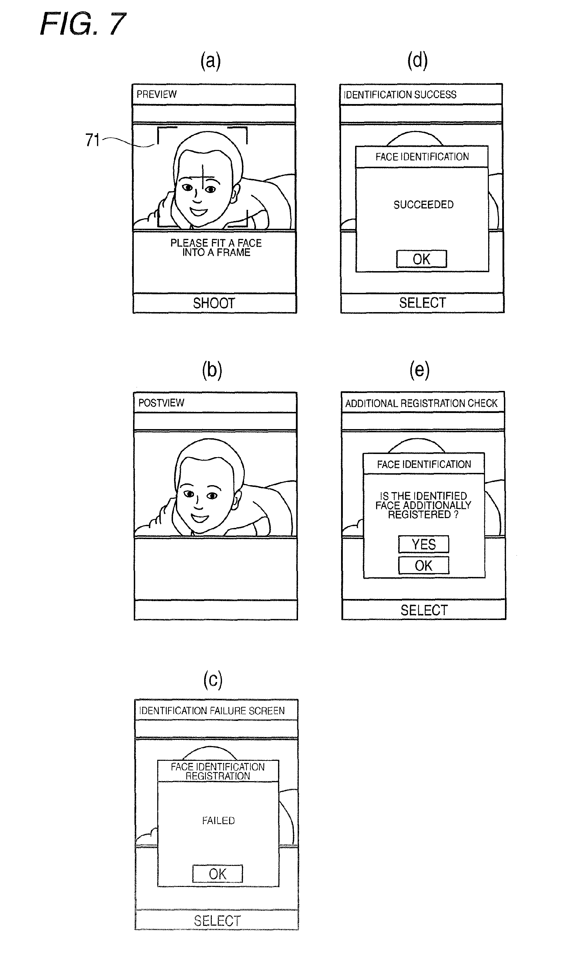

Next, a flow of a bioinformation verifying process in the biometric identification system according to the embodiment of the present invention will be explained by taking as an example the case where a face identification is carried out by using a face image picked up with a camera, while referring to a display example of the face image displayed on the display portion provided to the biometric identification system. A process flow in verifying the bioinformation in the biometric identification system according to the embodiment of the present invention is shown in FIG.6. An example of an image display in verifying the bioinformation in the displaying portion provided to the biometric identification system according to the embodiment of the present invention is shown in FIG.7.

When the identification subject starts the face image identification, the biometric identification system starts up the camera (S601). When the biometric identification system causes the camera to start a shooting (S602), the displaying portion displays the image being shot with the camera (a preview screen shown in FIG.7(a))(S603). In order to improve the verification accuracy of the face identification of the identification subject, the displaying portion may urge the user to shoot the face such that the face image is fitted into a target 71 of a face position arranged at the center of the preview screen. Thus, the face of the identification subject can always be positioned at the center of the image. If the camera recognizes that the shutter is released by the identification subject (S604, YES), the displaying portion displays the face image that the camera picked up when the shutter is released (a postview screen shown in FIG.7(b))(S605).

The bioinformation verifying portion 14 starts the identification between the face image displayed on the postview screen and the face images registered in the registered bioinformation database 12 (S606). If an average value of the similarities between the face image displayed on the postview screen and the face images registered in the registered bioinformation database 12 is below a predetermined threshold value, the bioinformation verifying portion 14 decides that the face image displayed on the postview screen and the face images registered in the registered bioinformation database 12 do not belong to the same identification subject (S607, YES) and displays an identification failure screen shown in FIG.7(c)(S608). In contrast, if an average value of the similarities between the face image displayed on the postview screen and the face images registered in the registered bioinformation database 12 is in excess of a predetermined threshold value, the bioinformation verifying portion 14 decides that the face image displayed on the postview screen and the face images registered in the registered bioinformation database 12 belong to the same identification subject (S607, NO), and displays a face identification success screen shown in FIG.7(d)(S609). Then, the face image identification is ended. In this case, the approach of deciding whether or not the person who inputs the bioinformation belongs to the same identification subject based on the similarities between the face image displayed on the postview screen and the face images stored in the registered bioinformation database 12 is not limited to the approach of making a decision based on an average value of the above similarities.

Also, the bioinformation verifying portion 14 may operate as follows after step 608. After step 608, the bioinformation verifying portion 14 outputs the face image displayed on the postview screen to the bioinformation identifying portion 13, and then the bioinformation identifying portion 13 executes the similar processes to step S312 (S312a to S312f).

The bioinformation identifying portion 13 executes the process in step 312. If it is decided that the face image displayed on the postview screen is registrable as the face image for identification (S610, YES), the bioinformation identifying portion 13 causes the displaying portion to display a screen shown in FIG.7(e) to check an additional registration and urge the identification subject to register additionally the face image as the face image for identification (S611). Then, if the identification subject selects that the additional registration should be made (S612, YES), the bioinformation identifying portion 13 registers the face image displayed on the postview screen in the registered bioinformation database 12 (S613). In contrast, if the bioinformation identifying portion 13 decided that the face image displayed on the postview screen is not registrable as the face image for identification (S610, NO), the bioinformation verifying portion 14 ends the face image identification.

In this manner, the face images that the bioinformation verifying portion 14 decided not to belong to the face images of the same identification subject, out of the face images being picked up by the camera to identify the bioinformation of the identification subject are input into the bioinformation identifying portion 13, and then the bioinformation identifying portion 13 discriminates whether or not such face image is registrable in the registered bioinformation database 12. Therefore, the face image being picked up with the camera can be utilized effectively and can be registered in the registered bioinformation database 12. In this case, in the present embodiment of the present invention, the biometric identification system used in applying the face identification is described. But the biometric identification system of the present embodiment can be utilized in other identifying methods such as the fingerprint identification, the voiceprint identification, and the like.

Here, in the process in step 612, when the identification subject selects that the additional registration should be made, a screen to recommend the user to input the identification number peculiar to the identification subject may be displayed. Then, when the input identification number coincides with that of the identification subject, the process in step 613 may be executed. With this arrangement, even when it is decided by coincidence that the face image of the person different from the identification subject is registrable as the face image for identification, such a situation can be prevented that such face image is additionally registered in error in the registered bioinformation database 12.

The present invention is explained in detail with reference to the particular embodiment. But it is obvious to those skilled in the art that various variations and modifications can be applied without departing from a spirit and a scope of the present invention.

This application is based upon Japanese Patent Application (Japanese Patent Application No.2004-316111) filed on October 29, 2004; the entire contents of which are incorporated herein by reference.

### Industrial Applicability

The biometric identification system and the biometric identification method of the present invention possess such an advantage that the accuracy of verification in the biometric identification can be improved by registering plural pieces of bioinformation suitable for the verification, and is useful to the field of the biometric identification system and the biometric identification method that verify the object of the biometric identification by using bioinformation concerning the previously registered object of the biometric identification.

## Claims

1. A biometric identification system, comprising:
an inputting unit that inputs first bioinformation to be registered previously to execute a biometric identification;
a storing unit that stores second bioinformation to verify the first bioinformation;
a computing unit that computes a similarity between the first bioinformation and the second bioinformation; and
a registering unit that stores the first bioinformation into the storing unit as bioinformation of a same subject as the second bioinformation when the similarity between the first bioinformation and the second bioinformation is within a predetermined numerical range.

2. The biometric identification system according to claim 1, wherein the storing unit stores plural pieces of bioinformation of the same subject containing the first bioinformation and the second bioinformation;
wherein the inputting unit inputs third bioinformation to be registered previously to execute the biometric identification;
wherein the computing unit computes similarities between the third bioinformation and the plural pieces of bioinformation; and
wherein the registering unit causes the storing unit to record the third bioinformation as the bioinformation of the same subject as the plural pieces of bioinformation when at least one of similarities between the third bioinformation and the plural pieces of bioinformation is within a predetermined numerical range.

3. The biometric identification system according to claim 2, wherein the registering unit causes the storing unit to record the third bioinformation as the bioinformation of the same subject as the plural pieces of bioinformation when at least one of similarities between the third bioinformation and the plural pieces of bioinformation is within a predetermined numerical range which is adjusted in response to a number of the plural pieces of bioinformation.

4. The biometric identification system according to claim 2 or 3, further comprising:
a deciding unit that decides whether or not the bioinformation input by the inputting unit and the plural pieces of bioinformation stored in the storing unit belong to the bioinformation of the same subject,
wherein the inputting unit inputs fourth bioinformation to execute the biometric identification;
wherein the computing unit computes similarities between the fourth bioinformation and the plural pieces of bioinformation; and
wherein the deciding unit decides whether or not the fourth bioinformation and the plural pieces of bioinformation belong to the bioinformation of the same subject, based on the similarities between the fourth bioinformation and the plural pieces of bioinformation.

5. The biometric identification system according to claim 4, wherein the registering unit causes the storing unit to record the fourth bioinformation as the bioinformation of the same subject as the plural pieces of bioinformation when at least one of similarities between the fourth bioinformation and the plural pieces of bioinformation is within a predetermined numerical range after a decision is made by the deciding unit.

6. A biometric identification method of executing a biometric identification by using previously registered bioinformation, comprising:
a first inputting step of inputting first bioinformation to be registered previously to execute a biometric identification;
a first computing step of computing a similarity between the first bioinformation and second bioinformation registered previously to verify the first bioinformation; and
a first registering step of registering the first bioinformation as bioinformation of a same subject as the second bioinformation when the similarity between the first bioinformation and the second bioinformation is within a predetermined numerical range.

7. The biometric identification method according to claim 6, further comprising:
a second inputting step of inputting third bioinformation to be registered previously to execute the biometric identification;
a second computing step of computing similarities between the third bioinformation and the plural pieces of bioinformation of the same subject containing the first bioinformation and the second bioinformation registered in the first registering step; and
a second registering step of registering the third bioinformation as the bioinformation of the same subject as the plural pieces of bioinformation when at least one of similarities between the third bioinformation and the plural pieces of bioinformation is within a predetermined numerical range.

8. The biometric identification method according to claim 7, further comprising:
an adjusting step of adjusting the predetermined numerical value range in response to a number of the plural pieces of bioinformation,
wherein the second registering step registers the third bioinformation as the bioinformation of the same subject as the plural pieces of bioinformation when at least one of similarities between the third bioinformation and the plural pieces of bioinformation is within a predetermined numerical range which is adjusted in the adjusting step.

9. The biometric identification method according to claim 7 or 8, further comprising:
a third inputting step of inputting fourth bioinformation to execute the biometric identification;
a third computing step of computing similarities between the fourth bioinformation and the plural pieces of bioinformation; and
a deciding step of deciding whether or not the fourth bioinformation and the plural pieces of bioinformation belong to the bioinformation of the same subject, based on the similarities between the fourth bioinformation and the plural pieces of bioinformation.

10. The biometric identification method according to claim 9, further comprising:
a third registering step of registering the fourth bioinformation as the bioinformation of the same subject as the plural pieces of bioinformation when at least one of similarities between the fourth bioinformation and the plural pieces of bioinformation is within a predetermined numerical range after a decision is made in the deciding step.
